Europäisches Patentamt

European Patent Office

Office européen des brevets

(11) Numéro de publication: **0 036 154**
**B1**

(12) **FASCICULE DE BREVET EUROPEEN**

(45) Date de publication du fascicule du brevet: **12.09.84**

(51) Int. Cl.³: **B 29 F 1/10, H 01 B 13/20**

(21) Numéro de dépôt: **81101673.2**

(22) Date de dépôt: **09.03.81**

(54) **Machine de fabrication par moulage de pièces d'apport en forme de disques sur une tige.**

(30) Priorité: **14.03.80 FR 8005769**

(43) Date de publication de la demande:
**23.09.81 Bulletin 81/38**

(45) Mention de la délivrance du brevet:
**12.09.84 Bulletin 84/37.**

(84) Etats contractants désignés:
**BE CH DE FR GB IT LI NL SE**

(56) Documents cités:
**FR-A-1 035 845**
**FR-A-1 416 600**
**FR-A-2 108 142**
**FR-A-2 210 022**

(73) Titulaire: **LES CABLES DE LYON Société
anonyme dite:**
**170, avenue Jean Jaurès**
**F-69353 Lyon Cedex 2 (FR)**

(72) Inventeur: **Comte, Georges**
**10, rue des Noyers**
**F-69005 Lyon (FR)**
Inventeur: **Appriou, André**
**20, rue Boyer Résidence la Pomme B2**
**F-69160 Tassin la Demi-Lune (FR)**
Inventeur: **Couturier, Jean**
**17bis, rue Marcel Plasse**
**F-69290 Craponne (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne une machine de fabrication de pièces d'apport en forme de disques sur une tige de grande longueur, comprenant des éléments de moule entraînés par deux chaînes sans fin et venant s'appliquer les uns contre les autres dans une zone munie d'au moins un orifice d'injection de matière moulable, puis se séparant pour dégager les pièces en forme de disque fixées sur la tige de grande longueur.

On connaît par le document FR—A— 2.108.142 des machines de moulage de disques isolants en matière plastique sur un conducteur axial au cours de la fabrication de câbles coaxiaux. Ces machines comportent des éléments de moule fixés sur deux chaînes, de façon qu'un téton d'un élément de moule d'une chaîne vienne s'ajuster dans une empreinte en creux d'un élément de moule de l'autre chaîne et assure ainsi un bon ajustage des demi-cavités des éléments de chaque chaîne au moment où elles se présentent devant l'orifice d'injection de la matière plastique. Afin d'allonger la distance périodique entre des défauts de ligne provenant des irrégularités mécaniques des moules, il a été proposé dans ce document d'utiliser deux chaînes de longueurs différentes portant chacune un nombre d'éléments qui soit premier avec celui de l'autre chaîne. Cette condition serait remplie, si l'une des chaînes comportait un élément de plus que l'autre chaîne. Or, cela nécessiterait une construction particulière des éléments de façon que tous les éléments soient identiques. En pratique, on préfère par contre une composition des chaînes à partir d'une alternation d'éléments "mâles" et "femelles", ce qui conduit à composer les chaînes d'un nombre pair d'éléments et à choisir à deux la différence entre les nombres d'éléments des deux chaînes. L'invention a donc pour but de proposer une machine telle que spécifiée ci-dessus qui permette de donner à chacune des chaînes un nombre d'éléments de moule quelconque, et notamment un nombre impair. Elle a encore pour but de procurer une machine de fabrication dont les chaînes puissent différer d'un nombre impair d'éléments, et en particulier d'une unité, ce qui assure la réduction maximale de l'effet des défauts des éléments de moules sur la transmission de signaux à fréquence élevée dans des câbles coaxiaux.

Le but est atteint par une machine selon la définition donnée en préambule, machine qui est caractérisée en ce que l'une au moins des chaînes comporte au moins un élément dit "hermaphrodite", comportant à la fois au moins un téton et au moins une empreinte en creux, ainsi que des pattes antérieures d'attache à l'élément voisin d'écartement différent de celui des pattes postérieures d'attache à l'autre élément voisin, ces deux écartements étant tels qu'ils permettent d'ajouter ledit élément "hermaphrodite" entre un élément à pattes de grand écartement, dit "élément femelle" et un élément à pattes d'écartement plus faible, dit "élément mâle", ou entre deux éléments également hermaphrodites.

La machine répond en outre de préférence à au moins l'une des caractéristiques suivantes:

— L'une des chaînes possède un nombre d'éléments différent de celui de l'autre chaîne d'un nombre impair d'éléments hermaphrodites, et de préférence d'une unité.
— Les éléments de chaque chaîne comportent chacun du côté tourné vers les éléments de l'autre chaîne un téton et une empreinte en creux correspondant, venant s'ajuster sur une empreinte en creux et un téton d'un élément de l'autre chaîne.
— Les éléments d'une chaîne comportant chacun un téton et les éléments d'une autre chaîne chacun une empreinte en creux, venant s'ajuster sur le téton d'un élément de la première chaîne.

Il est décrit ci-après, à titre d'exemple et en référence aux figures du dessin, des éléments de moule d'une machine selon l'invention de fabrication de disques isolants sur un câble coaxial.

La figure 1 est une vue en perspective d'un élément hermaphrodite d'une chaîne employée dans la machine selon l'invention.

La figure 2 est une vue en perspective de deux éléments hermaphrodites d'une chaîne accolés pouvant également être employée dans une machine selon l'invention.

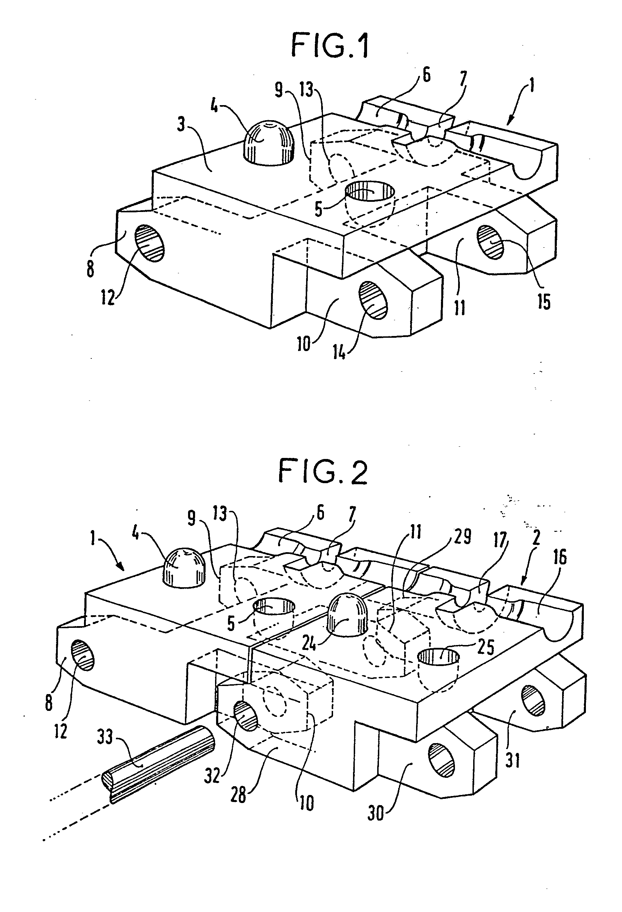

Dans la figure 1, un élément 1 présente une face supérieure plane 3 comportant un téton 4 et une empreinte en creux 5. Ce téton et cette empreinte sont destinés à venir coopérer avec une empreinte et un téton correspondants d'une autre chaîne d'éléments destinée à venir former avec la chaîne contenant l'élément 1 le moule de la machine de fabrication des disques isolants, la chaîne contenant l'élément 1 constituant la chaîne inférieure et l'autre la chaîne supérieure, et les éléments respectifs venant s'appliquer l'un contre l'autre dans un plan horizontal.

L'élément 1 comporte par ailleurs un canal 6 de passage d'un conducteur central sur lequel les disques isolants doivent être fixés, et une cavité 7 de moulage du disque isolant par injection de matière plastique (ce canal 6 et cette cavité 7 devant coopérer avec le canal et la cavité correspondants de l'élément de la chaîne supérieure pour fermer l'ensemble du canal de passage du conducteur et de la cavité de moulage du disque isolant).

L'élément 1 comporte en outre à l'avant des pattes d'attache extérieures 8 et 9, et à l'arrière des pattes d'attache intérieures 10 et 11, destinées à assurer sa jonction respectivement avec l'élément précédent et l'élément suivant. Les pattes avant extérieures 8 et 9 sont munies d'alésages 12 et 13, et les pattes arrière intérieures d'alésages 14 et 15, de façon à permettre le passage d'axes de liaison.

La figure 2 représente l'élément 1 assemblé avec un autre élément 2, qui lui est identique, ces éléments étant tous deux hermaphrodites. L'élément 2 comporte un téton 24 et une empreinte en creux 25, un canal de passage du conducteur central 16 et une cavité 17 de moulage du disque isolant. Ses pattes d'attache extérieures avant 28 et 29 percées d'alésages tels que 32 coopèrent avec les pattes arrière intérieures 10 et 11 de l'élément 1 pour permettre le passage d'un axe de jonction 33. On aperçoit également ses pattes arrière intérieures 30 et 31.

On voit que les éléments tels que 1 peuvent s'assembler indifféremment avec tout autre élément analogue de la même chaîne, ou entre un élément mâle et un élément femelle de la même chaîne, et qu'ils peuvent s'appliquer contre tout autre élément analogue d'une autre chaîne pour former une cavité de moulage de disque isolant. Le nombre d'éléments de moulage de chacune des chaînes peut donc être indifféremment pair ou impair, et leurs nombres d'éléments peuvent donc différer d'un nombre impair, notamment d'une unité. On peut ainsi obtenir des câbles coaxiaux dont les défauts des disques isolants ne se répètent qu'à de très longs intervalles, et par suite dont l'affaiblissement résultant des défauts des disques isolants est beaucoup diminué.

Les pattes d'attache avant peuvent être intérieures, et les pattes d'attache arrière extérieures.

L'invention s'applique plus particulièrement à la fabrication de disques isolants sur le conducteur central d'un câble coaxial.

**Revendications**

1. Machine de fabrication par moulage de pièces d'apport en forme de disques sur une tige de grande longueur, comprenant des éléments (1, 2) de moule entraînés par deux chaînes sans fin et venant s'appliquer les uns contre les autres dans une zone munie d'au moins un orifice d'injection de matière moulable, puis se séparant pour dégager les pièces en forme de disque fixées sur la tige de grande longueur, caractérisée en ce que l'une au moins des chaînes comporte au moins un élément dit "hermaphrodite", comportant à la fois au moins un téton et au moins une empreinte en creux, ainsi que des pattes antérieures (8) d'attache à l'élément voisin d'écartement différent de celui des pattes postérieures (10) d'attache à l'autre élément voisin, ces deux écartements étant tels qu'ils permettent d'ajouter ledit élément "hermaphrodite" entre un élément à pattes de grand écartement, dit "élément femelle", et un élément à pattes d'écartement plus faible, dit "élément mâle", ou entre deux éléments également hermaphrodites.

2. Machine selon la revendication 1, caractérisée en ce que l'une des chaînes possède un nombre d'éléments différent de celui de l'autre chaîne par un nombre impair d'éléments hermaphrodites.

3. Machine selon la revendication 2, caractérisée en ce que les nombres d'éléments des chaînes diffèrent d'une unité.

4. Machine selon l'une des revendications 1 à 3, caractérisée en ce que les éléments de chaque chaîne comportent chacun du côté tourné vers les éléments de l'autre chaîne un téton (4) et une empreinte en creux et un téton d'un élément de l'autre chaîne.

5. Machine selon l'une des revendications 1 à 3, caractérisée en ce que les éléments d'une chaîne comportent chacun un téton et les éléments d'une autre chaîne chacun une empreinte en creux, venant s'ajuster sur le téton d'un élément de la première chaîne.

**Patentansprüche**

1. Maschine zum Gießen von scheibenförmigen Aufsatzstücken auf einer Stange großer Länge, die von zwei endlosen Ketten angetriebene Gußformelemente (1, 2) aufweist, welche sich in einem mit mindestens einer Einspritzöffnung für gießbares Material versehenen Bereich gegeneinanderlegen und sich dann trennen, um die auf der Stange großer Länge befestigten scheibenförmigen Stücke freizugeben, dadurch gekennzeichnet, daß mindestens eine der Ketten mindestens ein "Hermaphrodit" genanntes Element aufweist, das zugleich mindestens einen Zapfen und mindestens eine entsprechende Aushöhlung sowie vordere Ansätze (8) zur Koppelung mit dem benachbarten Element besitzt, deren gegenseitiger Abstand sich von dem der hinteren Ansätze (10) zur Befestigung am anderen benachbarten Element unterscheidet, wobei diese beiden Abstände so gewählt sind, daß sie es ermöglichen, dieses "hermaphrodite" Element zwischen ein Element mit Ansätzen großer gegenseitiger Abstände, genannt "weibliches Element", und ein Element mit Ansätzen geringerer Abstände, genannt "männliches Element" oder zwischen zwei ebenfalls hermaphrodite Elemente einzufügen.

2. Maschine nach Anspruch 1, dadurch gekennzeichnet, daß eine der Ketten eine Anzahl von Elementen aufweist, die sich von der der anderen Kette um eine ungerade Zahl von hermaphroditen Elementen unterscheidet.

3. Maschine nach Anspruch 2, dadurch gekennzeichnet, daß eine der Ketten ein Element mehr als die andere Kette aufweist.

4. Maschine nach einem der Ansprüche 1 bis 3, dadurch gekennzeichnet, daß jedes Element jeder Kette auf der den Elementen der anderen Kette zugewandten Seite einen Zapfen (4) und eine entsprechende Aushöhlung (5) aufweist, die sich in eine Aushöhlung und einen Zapfen eines Elements der anderen Kette einpassen.

5. Maschine nach einem der Ansprüche 1 bis 3, dadurch gekennzeichnet, daß alle Elemente einer Kette einen Zapfen und alle Elemente einer anderen Kette eine Aushöhlung aufweisen, die sich über den Zapfen eines Elements der ersten Kette legt.

## Claims

1. A machine for manufacturing disk-shaped supply pieces on a very long rod by moulding, comprising moulding elements (1, 2) which are driven by two conveyor-chains and which are applied against one another in an area provided with at least one orifice for injecting a mouldable substance, then are separated in order to release the disk-shaped pieces fixed on the very long rod, characterized in that at least one of the chains comprises at least one element called "hermaphrodite" comprising as well at least one stud as at least one hollow, and front tabs (8) for coupling it to the adjacent element, the distance between these tabs being different with regard to that of the rear tabs (10) by which the element is coupled to the other adjacent element, these two distances being such that said "hermaphrodite" element can be inserted between an element with large distance tabs, called "female" element" and an element with smaller distance tabs, called "male element" or between two hermaphrodite elements.

2. A machine according to claim 1, characterized in that one of the chains has a number of elements differing from that of the other chain by an uneven number of hermaphrodite elements.

3. A machine according to claim 2, characterized in that the two chains differ in the number of elements by one unit.

4. A machine according to one of claims 1 to 3, characterized in that all the elements of both chains comprise on the side turned towards the elements of the outer chain a stud (4) and a corresponding hollow (5) for mating with a corresponding hollow and a corresponding stud of an element of the other chain.

5. A machine according to one of claims 1 to 3, characterized in that all the elements of one chain comprise a stud and all the elements of another chain comprise a hollow for mating with the stud of an element of the first chain.

## FIG.1

## FIG. 2